# EUROPEAN PATENT APPLICATION

(11) **EP 4 610 843 A1**
(43) Date of publication of application: **03.09.2025**
(21) Application number: 23887640.3
(22) Date of filing: 12.09.2023
(51) Int. Cl.: G06F 16/2455

(54) **INTERACTION METHOD AND APPARATUS, AND ELECTRONIC DEVICE AND STORAGE MEDIUM**

(30) Priority: 09.11.2022 CN 202211401426
(71) Applicant: Beijing Oppo Telecommunications Corp., Ltd., Beijing 100125 (CN)
(72) Inventor: WANG, Yuan, Beijing 100125 (CN)
(74) Representative: Penza, Giancarlo
(86) International application number: PCT/CN2023/118318
(87) International publication number: WO 2024/098946

(57) **Abstract**

Provided are an interaction method and apparatus, an electronic device and a storage medium. In response to receiving an information query operation, multiple pieces of target memorized information for the information query operation are obtained from multiple pieces of stored memorized information. Categories of the multiple pieces of target memorized information are obtained. Based on the categories of the multiple pieces of target memorized information, multiple pieces of answer information contained in the multiple pieces of target memorized information are selectively output. This can meet the user's demands for obtaining accurate memorized information, and improve the user experience.

## Description

### CROSS-REFERENCE OF RELATED APPLICATION

This application claims priority to Chinese Patent Application No. CN202211401426.9 filed November 9, 2022, and the entire contents of which are hereby incorporated by reference for all purposes.

### TECHNICAL FIELD

The present disclosure relates to the technical field of electronic devices, and particularly to an interaction method and apparatus, an electronic device and a storage medium.

### BACKGROUND

With the development of science and technology, electronic devices are getting widely used, and offer more and more functions. They have become one of the necessities in people's daily life. Currently, the electronic devices are gradually beginning to deploy thereon functions for user memory, for example recording dates, events, locations of items, and hobbies.

### SUMMARY

In view of this, the present disclosure proposes an interaction method and an apparatus, an electronic device and a storage medium to solve the above problem.

In a first aspect, embodiments of the present disclosure provide an interaction method. In the method, in response to receiving an information query operation, multiple pieces of target memorized information for the information query operation are obtained from multiple pieces of stored memorized information. Categories of the multiple pieces of target memorized information are obtained. Multiple pieces of answer information contained in the multiple pieces of target memorized information are selectively outputted based on the categories of the multiple pieces of target memorized information.

In a second aspect, the embodiments of the present disclosure provide an interaction apparatus. The apparatus includes a memorized information query module, a category obtaining module, and a memorized information output module. The memorized information query module is configured to obtain, in response to receiving an information query operation, multiple pieces of target memorized information for the information query operation from multiple pieces of stored memorized information. The category obtaining module is configured to obtain categories of the multiple pieces of target memorized information. The memorized information output module is configured to selectively output, based on the categories of the multiple pieces of target memorized information, multiple pieces of answer information contained in the multiple pieces of target memorized information.

In a third aspect, the embodiments of the present disclosure provide an electronic device. The electronic device includes a memory and a processor. The memory is coupled to the processor. The memory stores instructions which, when being executed by the processor, cause the processor to implement the method mentioned above.

In a fourth aspect, the embodiments of the present disclosure provide a computer-readable storage medium having program codes stored thereon, and the program codes are invokable by a processor to implement the method mentioned above.

### BRIEF DESCRIPTION OF THE DRAWINGS

In order to more clearly illustrate technical solutions in the embodiments of the present disclosure, drawings required for the description of the embodiments will be briefly introduced below. Apparently, the drawings described below are only some embodiments of the present disclosure. For those skilled in the art, other drawings can be obtained based on these drawings without paying any creative work.
FIG. 1 is a schematic flow chart of an interaction method provided in an embodiment of the present disclosure.
FIG. 2 is a schematic flow chart of an interaction method provided in an embodiment of the present disclosure.
FIG. 3 schematically illustrates a first interface of an electronic device as provided in the embodiments of the present disclosure.
FIG. 4 schematically illustrates a second interface of the electronic device as provided in the embodiments of the present disclosure.
FIG. 5 schematically illustrates a third interface of the electronic device as provided in the embodiments of the present disclosure.
FIG. 6 schematically illustrates a fourth interface of the electronic device as provided in the embodiments of the present disclosure.
FIG. 7 schematically illustrates a fifth interface of the electronic device as provided in the embodiments of the present disclosure.
FIG. 8 schematically illustrates a sixth interface of the electronic device as provided in the embodiments of the present disclosure.
FIG. 9 schematically illustrates a seventh interface of the electronic device as provided in the embodiments of the present disclosure.
FIG. 10 schematically illustrates an eighth interface of the electronic device as provided in the embodiments of the present disclosure.
FIG. 11 schematically illustrates a ninth interface of the electronic device as provided in the embodiments of the present disclosure.
FIG. 12 is a schematic flow chart of an interaction method provided in an embodiment of the present disclosure.
FIG. 13 is a schematic flow chart of an interaction method provided in an embodiment of the present disclosure.
FIG. 14 is a schematic flow chart of an interaction method provided in an embodiment of the present disclosure.
FIG. 15 is a schematic flow chart of operation S520 in the interaction method shown in FIG. 14 of the present disclosure.
FIG. 16 illustrates a module block diagram of an interaction apparatus provided in an embodiment of the present disclosure.
FIG. 17 illustrates a block diagram of an electronic device according to an embodiment of the present disclosure, where the electronic device is used to implement the interaction methods provided in the embodiments of the present disclosure.
FIG. 18 illustrates a storage unit for storing or carrying program codes according to an embodiment of the present disclosure, where the program codes are used to implement the interaction methods in the embodiments of the present disclosure.

### DETAILED DESCRIPTION OF PREFERRED EMBODIMENTS

In order to enable those skilled in the art to better understand the solutions of the present disclosure, the technical solutions in the embodiments of the present disclosure will be clearly and comprehensively described below in conjunction with the drawings in the embodiments of the present disclosure.

In the field of smart assistants such as smart voice assistants, manufacturers of electronic devices have begun to deploy functions for user memories, for example recording dates, events, locations of items, diaries, numbers, and hobbies. When a user queries memorized (memory, memorization, or recorded) information stored in the electronic device, even if multiple pieces of related memorized information are found, the electronic device would only output a single piece of memorized information, and it cannot integrate the multiple pieces of memorized information for presentation, which cannot meet the user's demands of viewing multiple pieces of related memorized information.

In view of the above, the inventor, after long-term research, proposed an interaction method and apparatus, an electronic device and a storage medium as provided in the embodiments of the present disclosure. In the embodiments of the present disclosure, when the user queries memorized information, the queried memorized information is presented in different ways according to its corresponding category, which can meet the user's demands for obtaining accurate memorized information and improve the user experience. The specific interaction method will be described in detail in the subsequent embodiments.

The embodiments of the present disclosure provide an interaction method. The method includes: in response to receiving an information query operation, obtaining, from a plurality of pieces of stored memorized information, a plurality of pieces of target memorized information for the information query operation; obtaining categories of the plurality of pieces of target memorized information; and selectively outputting, based on the categories of the plurality of pieces of target memorized information, a plurality of pieces of answer information contained in the plurality of pieces of target memorized information.

In some implementations of the present disclosure, the selectively outputting, based on the categories of the plurality of pieces of target memorized information, the plurality of pieces of answer information contained in the plurality of pieces of target memorized information, includes: in response to the categories of the plurality of pieces of target memorized information being a first preset category, outputting the plurality of pieces of answer information contained in all the plurality of pieces of target memorized information; in response to the categories of the plurality of pieces of target memorized information being a second preset category, selecting one piece of target memorized information from the plurality of pieces of target memorized information, and outputting a piece of answer information contained in the selected one piece of target memorized information.

In some implementations of the present disclosure, the outputting the plurality of pieces of answer information contained in all the plurality of pieces of target memorized information in response to the categories of the plurality of pieces of target memorized information being the first preset category, includes: in response to the categories of the plurality of pieces of target memorized information being the first preset category, merging the plurality of pieces of answer information contained in all the plurality of pieces of target memorized information, and outputting the merged answer information.

In some implementations of the present disclosure, the merging the plurality of pieces of answer information contained in all the plurality of pieces of target memorized information and outputting the merged answer information, includes: obtaining spliced information by splicing the plurality of pieces of answer information contained in all the plurality of pieces of target memorized information, and outputting the spliced information; or obtaining fused information by fusing the plurality of pieces of answer information contained in all the plurality of pieces of target memorized information, and outputting the fused information.

In some implementations of the present disclosure, the method further includes: outputting a piece of original words information corresponding to each piece of target memorized information containing a piece of output answer information.

In some implementations of the present disclosure, the outputting the plurality of answer information contained in all the plurality of pieces of target memorized information in response to the categories of the plurality of pieces of target memorized information being the first preset category, includes: in response to the categories of the plurality of pieces of target memorized information being the first preset category, outputting the plurality of pieces of answer information contained in all the plurality of pieces of target memorized information in order of creation times of all the plurality of pieces of target memorized information from latest to earliest; or in response to the categories of the plurality of pieces of target memorized information being the first preset category, outputting the plurality of pieces of answer information contained in all the plurality of pieces of target memorized information in order of priorities of all the plurality of pieces of target memorized information from high to low.

In some implementations of the present disclosure, the selecting one piece of target memorized information from the plurality of pieces of target memorized information includes: selecting, from the plurality of pieces of target memorized information, one piece of target memorized information that is most recently created; or selecting, from the plurality of pieces of target memorized information, one piece of target memorized information added with a target mark.

In some implementations of the present disclosure, the selectively outputting, based on the categories of the plurality of pieces of target memorized information, the plurality of pieces of answer information contained in the plurality of pieces of target memorized information, includes: selectively outputting, based on the categories of the plurality of pieces of target memorized information, the plurality of answer information contained in the plurality of pieces of target memorized information through voice broadcast; and/or selectively outputting, based on the categories of the plurality of pieces of target memorized information, the plurality of answer information contained in the plurality of pieces of target memorized information through interface display.

In some implementations of the present disclosure, the obtaining the categories of the plurality of pieces of target memorized information includes: obtaining a memorization tag of each of the plurality of pieces of target memorized information; and obtaining, based on the memorization tag of each of the plurality of pieces of target memorized information, the category of the each of the plurality of pieces of target memorized information.

In some implementations of the present disclosure, the obtaining, based on the memorization tag of each of the plurality of pieces of target memorized information, the category of the each of the plurality of pieces of target memorized information, includes: obtaining, based on correspondences between a plurality of memorization tags and a plurality of categories, a category corresponding to the memorization tag of each of the plurality of pieces of target memorized information, as the category of the piece of target memorized information.

In some implementations of the present disclosure, before obtaining, in response to receiving the information query operation, the plurality of pieces of target memorized information for the information query operation from the plurality of pieces of stored memorized information, the method further includes: obtaining a piece of original words information of a user; performing natural language processing on the piece of original words information, and obtaining structured information of the piece of original words information; and storing the piece of original words information and the structured information of the piece of original words information, as a piece of memorized information.

In some implementations of the present disclosure, the method further includes: in response to there being a piece of memorized information in the plurality of pieces of stored memorized information that has a same type as the piece of original words information, storing the piece of original words information and this piece of memorized information of the same type in an associated manner.

In some implementations of the present disclosure, the structured information of the piece of original words information includes an entity attribute of the piece of original words information, and the storing, in response to there being a piece of memorized information in the plurality of pieces of stored memorized information that has the same type as the piece of original words information, the piece of original words information and this piece of memorized information of the same type in the associated manner, includes: in response to there being a piece of memorized information in the plurality of pieces of stored memorized information whose entity attribute is the same as the entity attribute of the piece of original words information, storing the piece of original words information and this piece of memorized information of the same type in the associated manner, where pieces of information having a same entity attribute represent that the pieces of information are of a same type.

In some implementations of the present disclosure, the structured information of the piece of original words information further includes an entity attribute value, and the storing, in response to there being a piece of memorized information in the plurality of pieces of stored memorized information whose entity attribute is the same as the entity attribute of the piece of original words information, the piece of original words information and this piece of memorized information of the same type in the associated manner, includes: in response to there being a piece of memorized information in the plurality of pieces of stored memorized information whose entity attribute is the same as the entity attribute of the piece of original words information, storing the entity attribute value of the piece of original words information and an entity attribute value of this piece of memorized information of the same type in the associated manner.

In some implementations of the present disclosure, the storing the piece of original words information and the structured information of the piece of original words information includes: in response to the structured information of the piece of original words information not meeting a preset complete condition, outputting prompt information, where the prompt information is used to prompt modification for the piece of original words information; and obtaining a piece of modified original words information that is modified based on the prompt information, and storing the piece of modified original words information and structured information of the piece of modified original words information, where the structured information of the piece of modified original words information meets the preset complete condition.

In some implementations of the present disclosure, before obtaining, in response to receiving the information query operation, the plurality of pieces of target memorized information for the information query operation from the plurality of pieces of stored memorized information, the method further includes: in response to detecting a first target touch operation performed on a first target control, determining that the information query operation is received.

In some implementations of the present disclosure, before obtaining, in response to receiving the information query operation, the plurality of pieces of target memorized information for the information query operation from the plurality of pieces of stored memorized information, the method further includes: in response to receiving voice information, obtaining keywords contained in the voice information by performing keyword extraction on the voice information; and in response to the keywords including a first target keyword, determining that the information query operation is received.

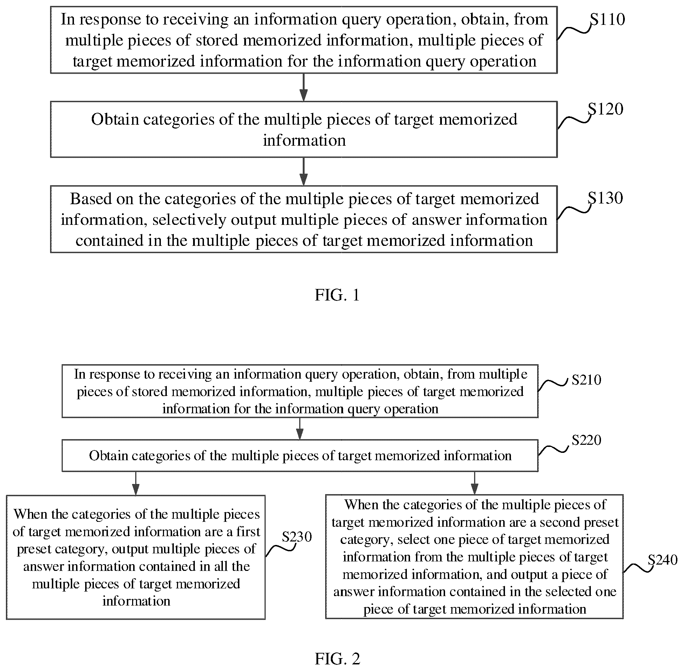

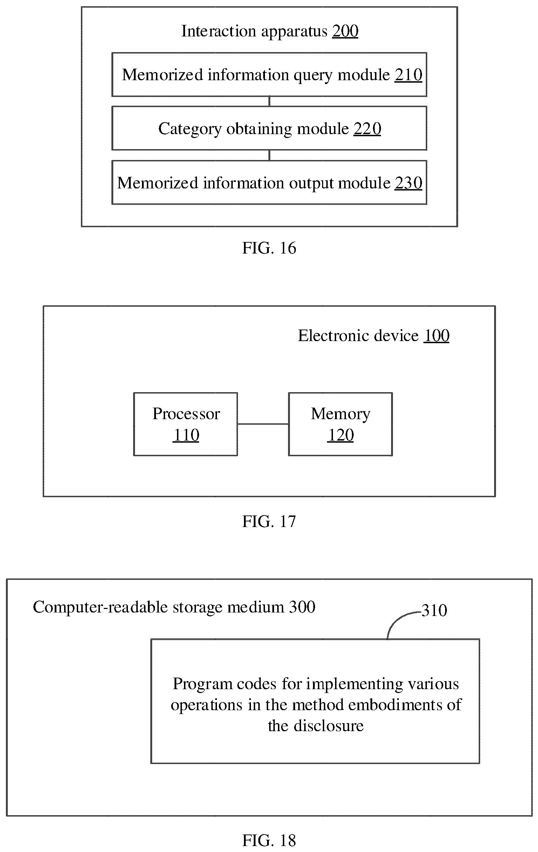

As illustrated in FIG. 1, a schematic flow chart of an interaction method provided in an embodiment of the present disclosure is shown. In this method, when the user queries memorized information, the queried memorized information is presented in different ways according to its corresponding category, which can meet the user's demands for obtaining accurate memorized information and improve the user experience. In some specific embodiments, the interaction method is applied to an interaction apparatus 200 as illustrated in FIG. 16 and an electronic device 100 (FIG. 17) configured with the interaction apparatus 200. The specific process of this embodiment is described below by taking an electronic device as an example. Of course, it is understandable that the electronic device used in this embodiment may include a smart phone, a tablet computer, a wearable electronic device, etc., which is not limited here. The process illustrated in FIG. 1 is described in detail below. The interaction method may specifically include operations S110-S130 as follows.

At S110, in response to receiving an information query operation, multiple pieces of target memorized information for the information query operation are obtained from multiple pieces of stored memorized information.

In the embodiment, before receiving the information query operation, the electronic device may obtain and store multiple pieces of memorized information. Each piece of memorized information may include a piece of original words information and structured information of the piece of original words information. The original words information may be input, as information to be memorized/remembered, by the user into the electronic device. The structured information of the original words information may be obtained by performing, at the electronic device, natural language processing (NLP) on the original words information.

In some implementations, the types of the multiple pieces of memorized information may be the same or different. For example, the multiple pieces of memorized information may all be memorized information of a date type, or the multiple pieces of memorized information may include memorized information of a date type and memorized information of a location type, etc., which is not limited here.

In some implementations, the multiple pieces of memorized information stored in the electronic device may include passive memorized information obtained from historical content, active memorized information obtained from historical content, or both passive memorized information and active memorized information obtained from historical content. The active memorized information refers to information that the user actively inputs and instructs the electronic device to memorize/remember, for example, the user enters "The cash gift to Chen Lin is 666" through text or voice. The passive memorized information refers to information that is not actively input by the user but detected and memorized/remembered by the electronic device, for example, the number of steps, heart rates and other health information recorded by sensors on the user's wearable device.

In some implementations, the electronic device may determine that the information query operation is received, in response to detecting a first target touch operation. For example, when detecting a first target touch operation performed on a target physical key, the electronic device may determine that the information query operation is received. Alternatively, when detecting a first target touch operation performed on a target virtual key, the electronic device may determine that the information query operation is received. The first target touch operation may include a click operation, a press operation, a slide operation, etc., which is not limited here. As an implementation, the electronic device may display a first target control used to trigger a query for memorized information. Therefore, a touch operation performed on the first target control may be detected. If the first target touch operation performed on the first target control is detected, it may be determined that the information query operation is received.

In some implementations, the electronic device may determine that the information query operation is received, in response to detecting first target voice information. For example, when receiving voice information including a first target keyword, the electronic device may determine that the information query operation is received. For example, the first target keyword may include "query", "search", "seacrch the records", "search the memorized information", "look for the memorized information", etc., which is not limited here. Therefore, in the embodiment, when voice information input by the user is received, keyword extraction may be performed on the voice information to obtain keywords contained in the voice information, and the keywords contained in the voice information may be compared with the first target keyword to determine whether the keywords contained in the voice information include the first target keyword. If the keywords contained in the voice information include the first target keyword, it may be determined that the information query operation is received. If the keywords contained in the voice information do not include the first target keywords, it may be determined that the information query operation is not received.

In the embodiment, after receiving the information query operation, multiple pieces of target memorized information for the information query operation may be obtained from the multiple pieces of stored memorized information in response to the information query operation. That is, the multiple pieces of target memorized information are all query results for the information query operation. As an implementation, after receiving the information query operation, multiple pieces of memorized information stored in a memorized information storage repository may be retrieved to obtain multiple pieces of target memorized information for the information query operation. For example, the multiple pieces of stored memorized information include "My idol is Liu XX" and "I am a fan of Liu XX". Then, if the information query operation is "Who is my idol?", "My idol is Liu XX" and "I am a fan of Liu XX" may be determined from the multiple pieces of stored memorized information as multiple pieces of target memorized information.

At S120, categories of the multiple pieces of target memorized information are obtained.

In the embodiment, after the multiple pieces of target memorized information are obtained, the categories of the multiple pieces of target memorized information may be obtained, the categories of the multiple pieces of target memorized information being the same. The category of each piece of target memorized information may be a first preset category or a second preset category, and the first preset category is different from the second preset category. For example, the first preset category may be a short-term unique value category, and the second preset category may be a with long-term multiple-value category. The short-term unique value represents that the respective category of information generally needs to memorize the latest information, and accordingly, one piece of memorized information is finally output generally. The long-term multiple-value represents that the respective category of information needs to memorize multiple pieces of information in parallel, and accordingly, multiple pieces of memorized information may be ultimately output. For example, memorized information on for example birthday, wedding anniversary, school start time, exam time, location of an item, license plate number, account number, parking location, and meal pickup number may be of the short-term unique value category. Memorized information on for example idols, favorite restaurants, favorite foods, and favorite sports may be of the long-term multiple-value category. It is understandable that whether a certain piece of information is the short-term unique value category or the long-term multiple-value category may be set as required, which is not specifically limited in the embodiment.

In some implementations, when storing a piece of memorized information, the electronic device may store the piece of memorized information and a memorization tag of the piece of memorized information in an associated manner, where the memorization tag of the piece of memorized information may be used to represent the category of the piece of memorized information. Based on this, after multiple pieces of target memorized information are obtained, the memorization tags of the multiple pieces of target memorized information may be obtained. Based on the memorization tags of the multiple pieces of target memorized information, the categories of the multiple pieces of target memorized information may be obtained. As an implementation, the memorization tags of the multiple pieces of target memorized information may be the same.

At S130, based on the categories of the multiple pieces of target memorized information, multiple pieces of answer information contained in the multiple pieces of target memorized information are selectively output.

In the embodiment, after the categories of the multiple pieces of target memorized information are obtained, the multiple pieces of answer information contained in the multiple pieces of target memorized information may be selectively output based on the categories of the multiple pieces of target memorized information. The selective output refers to selecting some pieces of answer information from the multiple pieces of answer information contained in the multiple pieces of target memorized information for output and presentation. For example, the selective output may include outputting all pieces of answer information contained in all the multiple pieces of target memorized information. For example, all the multiple pieces of target memorized information together contain a total of 5 pieces of answer information, and the selective output may include outputting all the 5 pieces of answer information for presentation. Alternatively, the selective output may also include selecting a portion of the multiple pieces of answer information contained in all the multiple pieces of target memorized information for output and presentation. For example, all the multiple pieces of target memorized information together contains a total of 5 pieces of answer information, and the selective output may include selecting 1 or 2 or 3 or 4 pieces of answer information from these 5 pieces of answer information for output and presentation.

The answer information contained in the memorized information may include date, location, person, hobby, health, number, or other information, which is not limited here. When the answer information contained in a piece of memorized information is date information, the answer information contained in the piece of memorized information may include information on a birthday, a wedding anniversary, a love anniversary, a school start time, an exam time, or the like. When the answer information contained in a piece of memorized information is location information, the answer information contained in the piece of memorized information may include information on a location of an item, a parking location of a vehicle, or the like. When the answer information contained in a piece of memorized information is person information, the answer information contained in the piece of memorized information may include information on an idol, or a favorite people. When the answer information contained in a piece of memorized information is hobby information, the answer information contained in the piece of memorized information may include information on a favorite restaurant, favorite food, a favorite sport, or the like. When the answer information contained in a piece of memorized information is health information, the answer information contained in the piece of memorized information may include information on height, weight, blood pressure or the like. When the answer information contained in a piece of memorized information is number information, the answer information contained in the piece of memorized information may include information on a license plate number, an account number, an ID card number, a bank card number, or the like. This is not limited here.

In some implementations, the answer information contained in a piece of target memorized information may include structured information of a piece of original words information corresponding to the piece of target memorized information. The structured information of the piece of original words information may include an entity attribute value, and the answer information contained in the piece of target memorized information may be the entity attribute value of the piece of original words information corresponding to the piece of target memorized information. For example, the information query operation is used to query how much the cash gift given to Chen Lin, and the piece of original words information corresponding to a piece of target memorized information is "the cash gift to Chen Lin is 666", then the answer information contained in the piece of target memorized information is "666".

As an implementation, the category of each piece of memorized information may include the first preset category and the second preset category. Based on this, if the categories of the multiple pieces of target memorized information are the first preset category, the multiple pieces of answer information contained in the multiple pieces of target memorized information may be selectively output in a first manner. If the categories of the multiple pieces of target memorized information are the second preset category, the multiple pieces of answer information contained in the multiple pieces of target memorized information may be selectively output in a second manner. The first preset category is different from the second preset category, and the first manner is different from the second manner.

As another implementation, the electronic device may be pre-set with and store a third preset category, and the third preset category is used as a basis for determining the category of a piece of target memorized information. Thus, in the embodiment, after the category of a piece of target memorized information is obtained, it may determine whether the category of the piece of target memorized information is the third preset category. If it is determined that the categories of the multiple pieces of target memorized information are the third preset category, the multiple pieces of answer information contained in the multiple pieces of target memorized information may be selectively output in a third manner. If it is determined that the categories of the multiple pieces of target memorized information are not the third preset category, the multiple pieces of answer information contained in the multiple pieces of target memorized information may be selectively output in a fourth manner. The third manner is different from the fourth manner.

In some implementations, the selectively outputting the multiple pieces of answer information contained in the multiple pieces of target memorized information may include: selectively outputting the multiple pieces of answer information contained in the multiple pieces of target memorized information through voice; selectively outputting the multiple pieces of answer information contained in the multiple pieces of target memorized information through text(s); selectively outputting the multiple pieces of answer information contained in the multiple pieces of target memorized information through wireless transmission; selectively outputting the multiple pieces of answer information contained in the multiple pieces of target memorized information through vibration, etc., which is not limited here.

As an implementation, in a case where the multiple pieces of answer information contained in the multiple pieces of target memorized information are selectively output through text(s), a target card may be popped up, and one or more pieces of answer information contained in one or more pieces of target memorized information may be displayed on the target card. While the one or more pieces of answer information contained in the one or more pieces of target memorized information are displayed on the target card, the original words information corresponding to the one or more pieces of target memorized information, the creation time(s) of the one or more pieces of target memorized information, the memorization type(s) of the one or more pieces of target memorized information and the like may also be displayed on the target card, which is not limited here. If the electronic device does not display a current interface (for example, the screen is off) during the process of querying the memorized information, after the multiple pieces of target memorized information are successfully queried, the screen may be directly switched on to display the target card, and the one or more pieces of answer information contained in one or more pieces of target memorized information may be displayed on the target card. If the electronic device displays a current interface (such as a desktop, an application interface, or a memorized information display interface) during the process of querying the memorized information, after the multiple pieces of target memorized information are successfully queried, the target card may be popped up and displayed on the current interface, and one or more pieces of answer information contained in one or more pieces of target memorized information may be displayed on the target card.

As an implementation, for a piece of target memorized information, answer information may be extracted from the piece of target memorized information to obtain a piece of answer information contained in the piece of target memorized information. Then, the multiple pieces of answer information contained in the multiple pieces of target memorized information may be selectively output, so that the multiple pieces of answer information from the multiple pieces of target memorized information may be more intuitively accessed, thereby improving the user experience.

As an implementation, natural language processing may be performed on the multiple pieces of target memorized information to obtain structured information of each of the multiple pieces of target memorized information. A piece of answer information contained in each of the multiple pieces of target memorized information may be obtained from the structured information of each of the multiple pieces of target memorized information. Then, the multiple pieces of answer information contained in the multiple pieces of target memorized information may be selectively output. The structured information may include an entity, an entity attribute and an entity attribute value. Then, the entity attribute value of each of the multiple pieces of target memorized information may be obtained from the entity, entity attribute and entity attribute value of the piece of target memorized information, and the entity attribute value of each of the multiple pieces of target memorized information may be determined as the piece of answer information contained in the piece of target memorized information. Thereafter, the multiple pieces of answer information contained in the multiple pieces of target memorized information may be selectively output.

In the interaction method provided in the embodiment of the present disclosure, in response to receiving an information query operation, multiple pieces of target memorized information for the information query operation are obtained from multiple pieces of stored memorized information. Categories of the multiple pieces of target memorized information are obtained, and multiple pieces of answer information contained in the multiple pieces of target memorized information are selectively output based on the categories of the multiple pieces of target memorized information. In this way, when the user queries memorized information, the queried memorized information is presented in different ways according to its corresponding category, which can meet the user's demands for obtaining accurate memorized information and improve the user experience.

As illustrated in FIG. 2, a schematic flow chart of an interaction method provided in an embodiment of the present disclosure is shown. The process illustrated in FIG. 2 is described in detail below. The interaction method may specifically include operations S210-S240 as follows.

At S210, in response to receiving an information query operation, multiple pieces of target memorized information for the information query operation are obtained from multiple pieces of stored memorized information.

At S220, categories of the multiple pieces of target memorized information are obtained.

For the detailed description of operations S210 and S220, reference may be made to operations S110 and S120, which will not be repeated here.

At S230, when the categories of the multiple pieces of target memorized information are a first preset category, multiple pieces of answer information contained in all the multiple pieces of target memorized information are output.

In some implementations, the electronic device may be pre-set with and store a first preset category, and the first preset category may be a long-term multiple-value category used to represent that multiple pieces of memorized information are finally adopted for output. Therefore, in the embodiment, after the categories of the multiple pieces of target memorized information are obtained, the categories of the multiple pieces of target memorized information may be compared with the first preset category to determine whether the categories of the multiple pieces of target memorized information are the first preset category. The first preset category may involve a person type, a hobby type, a health type, etc., which is not limited here.

When it is determined that the categories of the multiple pieces of target memorized information are the first preset category, it may be considered that the multiple pieces of target memorized information meet a condition of using multiple pieces of target memorized information as the output result, then all the multiple pieces of answer information contained in all the multiple pieces of target memorized information may be output. For example, if the information query operation is used to query the user's idol, multiple pieces of target memorized information include "My idol is Liu XX" and "I am a fan of Zhou XX", and the categories of the multiple pieces of target memorized information are the first preset category, then "Liu XX" being the piece of answer information from "My idol is Liu XX" may be output, and "Zhou XX" being the piece of answer information from "I am a fan of Liu XX" may be output.

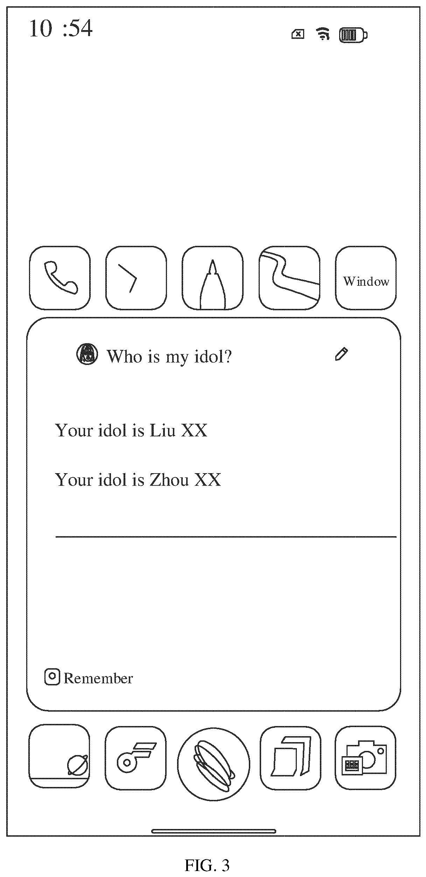

Referring to FIG. 3, a first interface of the electronic device as provided in the embodiments of the present disclosure is schematically shown. As illustrated in FIG. 3, the information query operation is used to query the user's idol. A query sentence "Who is my idol?" may be entered. The queried target memorized information includes "My idol is Liu XX" entered by the user on September 15, 2022 and "I am a fan of Zhou XX" entered by the user on August 4, 2022. Then, "Your idol is Liu XX" and "Your idol is Zhou XX" may be displayed.

In some implementations, when the categories of the multiple pieces of target memorized information are the first preset category, the selectively outputting the multiple pieces of answer information contained in the multiple pieces of target memorized information may include: in response to the categories of the multiple pieces of target memorized information being the first preset category, merging the multiple pieces of answer information contained in all the multiple pieces of target memorized information and outputting the merged answer information.

As an implementation, the merging the multiple pieces of answer information contained in all the multiple pieces of target memorized information and outputting the merged answer information may include: slicing the multiple pieces of answer information contained in all the multiple pieces of target memorized information to obtain spliced information, and outputting the spliced information; or, fusing the multiple pieces of answer information contained in all the multiple pieces of target information to obtain fused information, and outputting the fused information.

For example, for an information query operation used to query who is my idol, if all the multiple pieces of target memorized information obtained are "My idol is Liu XX" and "I am a fan of Zhou XX", it may be determined that the piece of answer information contained in the piece of target memorized information "My idol is Liu XX" is "Liu XX", and the piece of answer information contained in the piece of target memorized information "I am a fan of Zhou XX" is "Zhou XX". Then, if the multiple pieces of answer information contained in all the multiple pieces of target memorized information are merged through splicing, the finally output spliced information may include: your idol is Liu XX & your idol is Zhou XX. If the multiple pieces of answer information contained in all the multiple pieces of target memorized information are merged through fusion, the finally output fused information may include: your idol is Liu XX & Zhou XX.

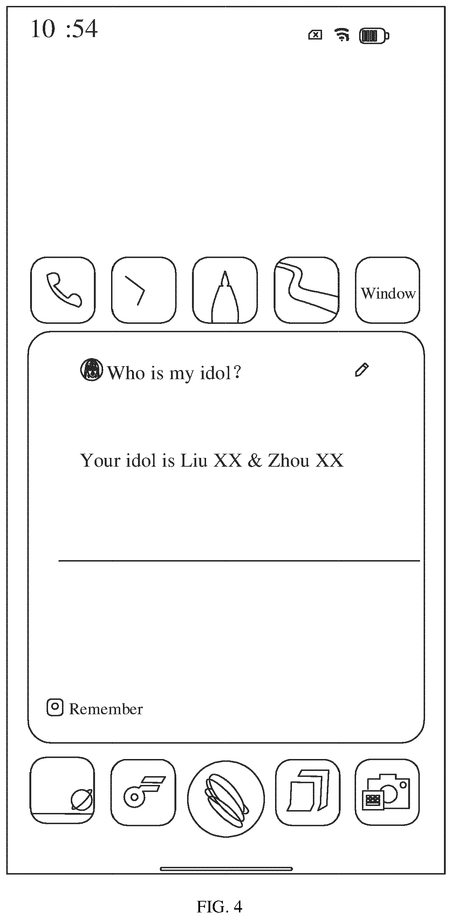

Referring to FIG. 4, a second interface of the electronic device as provided in the embodiments of the present disclosure is schematically shown. As illustrated in FIG. 4, the information query operation is used to query the user's idol. A query sentence "Who is my idol?" may be entered. The queried target memorized information includes "My idol is Liu XX" entered by the user on September 15, 2022 and "I am a fan of Zhou XX" entered by the user on August 4, 2022. Then, the information merged from all the multiple pieces of target memorized information may be displayed as "Your idol is Liu XX & Zhou XX".

In some implementations, the electronic device may also output a piece of original words information corresponding to each piece of target memorized information contaning a piece of output answer information. The electronic device may output only the multiple pieces of answer information contained in all the multiple pieces of target memorized information, output only a piece of original words information corresponding to each piece of target memorized information contaning a piece of answer information, or output both a piece of original words information corresponding to each piece of target memorized information contaning a piece of answer information and the multiple pieces of answer information contained in all the multiple pieces of target memorized information.

Taking, as an example, a case where not only a piece of original words information corresponding to each piece of target memorized information contaning a piece of answer information but also the multiple pieces of answer information contained in all the multiple pieces of target memorized information are output, if the information query operation is used to query the user's idol, all the multiple pieces of target memorized information include "My idol is Liu XX" and "I am a fan of Zhou XX", the piece of answer information contained in the piece of target memorized information "My idol is Liu XX" is Liu XX, and the piece of answer information contained in the piece of target memorized information "I am a fan of Liu XX" is "Zhou XX". In this case, the piece of original words information "My idol is Liu XX" corresponding to the piece of target memorized information containing the piece of answer information "Liu XX", the piece of original words information "I am a fan of Zhou XX" corresponding to the piece of target memorized information containing the piece of answer information "Zhou XX", and "Your idol is Liu XX & Zhou XX" including the pieces of answer information contained in all the pieces of target memorized information may be output.

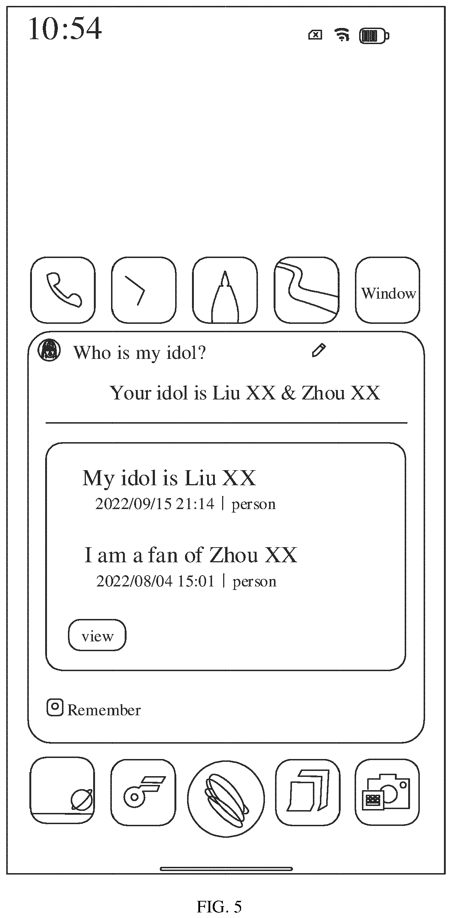

Referring to FIG. 5, a third interface of the electronic device as provided in the embodiments of the present disclosure is schematically shown. As illustrated in FIG. 5, the information query operation is used to query the user's idol. A query statement "Who is my idol?" may be entered. The multiple pieces of target memorized information queried include "My idol is Liu XX" entered by the user on September 15, 2022 and "I am a fan of Zhou XX" entered by the user on August 4, 2022. Then, the pieces of original words information corresponding to all the multiple pieces of target memorized information "My idol is Liu XX" and "I am a fan of Zhou XX", as well as the merged information "Your idol is Liu XX & Zhou XX" obtained by merging the multiple pieces answer information contained in all the multiple pieces of target memorized information may be displayed.

Based on this, in the embodiment of the present disclosure, not only the answer information contained in the target memorized information may be output, but the original words information corresponding to the target memorized information where the answer information is located can also be output. As such, the user may check whether the answer information is correct by comparing the answer information with the original words information. This improves the verifiability, error tolerance, and display diversity of memorization query results.

As an implementation, if all the multiple pieces of target memorized information and multiple pieces of answer information contained in all the multiple pieces of target memorized information are output simultaneously, the multiple pieces of answer information contained in all the multiple pieces of target memorized information may be displayed in an emphasized manner. As an implementation, displaying the multiple pieces of answer information contained in all the multiple pieces of target memorized information in an emphasized manner may include: displaying the multiple pieces of answer information contained in all the multiple pieces of target memorized information at a prominent position, for example, the multiple pieces of answer information may be displayed before a display position of all the multiple pieces of target memorized information; displaying the multiple pieces of answer information contained in all the multiple pieces of target memorized information in bold; displaying the multiple pieces of answer information contained in all the multiple pieces of target memorized information with the multiple pieces of answer information underlined; displaying the multiple pieces of answer information contained in all the multiple pieces of target memorized information in an enlarged manner; highlighting the multiple pieces of answer information contained in all the multiple pieces of target memorized information, etc., which is not limited here.

In some implementations, when the categories of the multiple pieces of target memorized information are the first preset category, the selectively outputting the multiple pieces of answer information contained in the multiple pieces of target memorized information may include: when the categories of the multiple pieces of target memorized information are the first preset category, outputting the multiple pieces of answer information contained in all the multiple pieces of target memorized information in order of creation times of the multiple pieces of target memorized information from latest to earliest.

As an implementation, when the categories of the multiple pieces of target memorized information are the first preset category, the creation time of each of all the multiple pieces of target memorized information may be obtained, and the creation times of all the multiple pieces of target memorized information may be compared to obtain a first comparison result. Based on the first comparison result, the order of creation times between every two pieces of target memorized information in all the multiple pieces of target memorized information may be determined, and the multiple pieces of answer information contained in all the multiple pieces of target memorized information may be output in order of the creation times from latest to earliest. Based on this, when the multiple pieces of answer information contained in all the multiple pieces of target memorized information are output through an interface, the later the creation time of a piece of target memorized information, the more forward a position at which its contained answer information is displayed on the interface; and the earlier the creation time of a piece of target memorized information, the more backward a position at which its contained answer information is displayed on the interface. When all the multiple pieces of target memorized information are output through voice, the later the creation time of a piece of target memorized information, the earlier its contained answer information is output through voice; and the earlier the creation time of a piece of target memorized information, the later its contained answer information is output through voice.

In some implementations, when the categories of the multiple pieces of target memorized information are the first preset category, the selectively outputting the multiple pieces of answer information contained in the multiple pieces of target memorized information may include: when the categories of the multiple pieces of target memorized information are the first preset category, outputting the multiple pieces of answer information contained in all the multiple pieces of target memorized information in order of priorities of the multiple pieces of target memorized information from high to low.

As an implementation, when the categories of the multiple pieces of target memorized information are the first preset category, the priority of each of all the multiple pieces of target memorized information may be obtained, and the priorities of all the multiple pieces of target memorized information may be compared to obtain a second comparison result. Based on the second comparison result, the order of priorities between every two pieces of target memorized information in all the multiple pieces of target memorized information may be determined, and the multiple pieces of answer information contained in all the multiple pieces of target memorized information may be output in order of priorities from high to low. Based on this, when the multiple pieces of answer information contained in all the multiple pieces of target memorized information are output through an interface, the higher the priority of a piece of target memorized information, the more forward a position at which its contained answer information is displayed on the interface; the lower the priority of a piece of target memorized information, the more backward a position at which its contained answer information is displayed on the interface. When all the multiple pieces of target memorized information are output through voice, the higher the priority of a piece of target memorized information, the earlier its contained answer information is output through voice; the lower the priority of a piece of target memorized information, the later its contained answer information is output through voice.

At S240, when the categories of the multiple pieces of target memorized information are a second preset category, one piece of target memorized information is selected from the multiple pieces of target memorized information, and a piece of answer information contained in the selected one piece of target memorized information is output.

In some implementations, the electronic device may be pre-set with and store the second preset category, and the second preset category may be a short-term unique value category used to represent that one piece of memorized information is finally adopted for output. Therefore, in the embodiment, after the categories of the multiple pieces of target memorized information are obtained, the categories of the multiple pieces of target memorized information may be compared with the second preset category to determine whether the categories of the multiple pieces of target memorized information are the second preset category. The second preset category may involve a date type, a location type, a number type, etc., which is not limited here.

When it is determined that the categories of the multiple pieces of target memorized information are the second preset category, it may be considered that the multiple pieces of target memorized information meet a condition of using one piece of target memorized information for the output result. Then, one piece of target memorized information may be selected from the multiple pieces of target memorized information, and the selected one piece of target memorized information may be output. For example, if the multiple pieces of target memorized information include "it needs to wait for 5 more people to dine" and "it needs to wait for 3 more people to dine", and the categories of the multiple pieces of target memorized information are the second preset category, then "it needs to wait for 3 more people to dine" may be output.

In some implementations, when the categories of the multiple pieces of target memorized information are the second preset category, the selecting one piece of target memorized information from the multiple pieces of target memorized information and outputting the selected one piece of target memorized information may include: when the categories of the multiple pieces of target memorized information are the second preset category, selecting one piece of target memorized information that is most recently created from the multiple pieces of target memorized information, and outputting the selected one piece of target memorized information.

As an implementation, when the categories of the multiple pieces of target memorized information are the second preset category, the creation time of each of the multiple pieces of target memorized information may be obtained, and the creation times of the multiple pieces of target memorized information may be compared to obtain a piece of target memorized information with the latest creation time as the piece of target memorized information most recently created, and the piece of target memorized information most recently created is output.

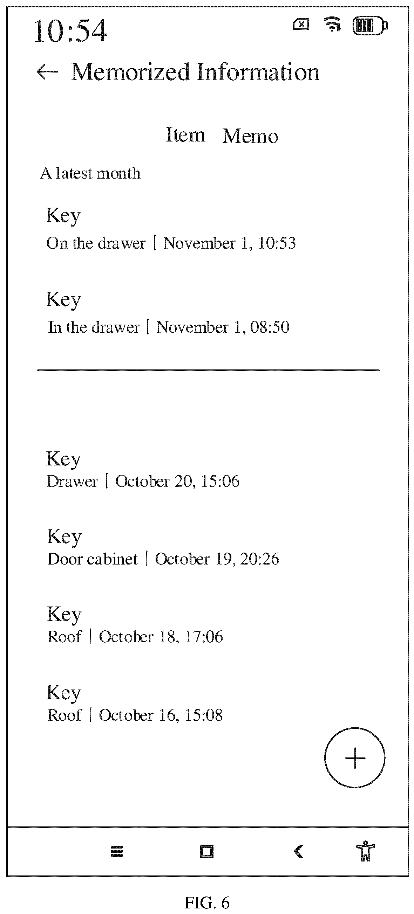

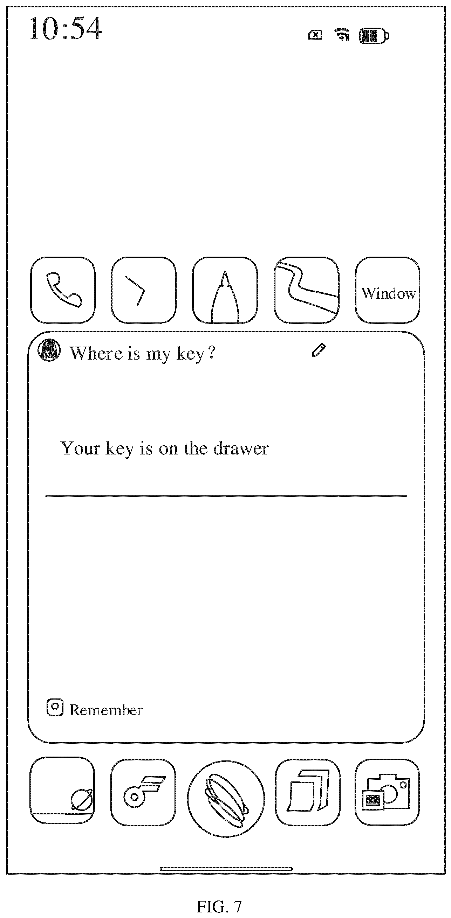

Referring to FIG. 6 and FIG. 7, FIG. 6 schematically illustrates a fourth interface of the electronic device as provided in the embodiments of the present disclosure, and FIG. 7 schematically illustrates a fifth interface of the electronic device as provided in the embodiments of the present disclosure. As illustrated in FIG. 6, in a memorized information display interface, the user has created multiple pieces of different memorized information at different times for a storage location of a key, and the piece of memorized information most recently created is "key, on the drawer". As illustrated in FIG. 7, the information query operation is used to query the location of the key. A query sentence "Where is my key?" may be entered. Multiple pieces of target memorized information are obtained through query, such as those illustrated in FIG. 6. Then, a piece of most recently created target memorized information "key, on the drawer" may be selected, and a piece of answer information "on the drawer" contained therein may be displayed, as illustrated in FIG. 7.

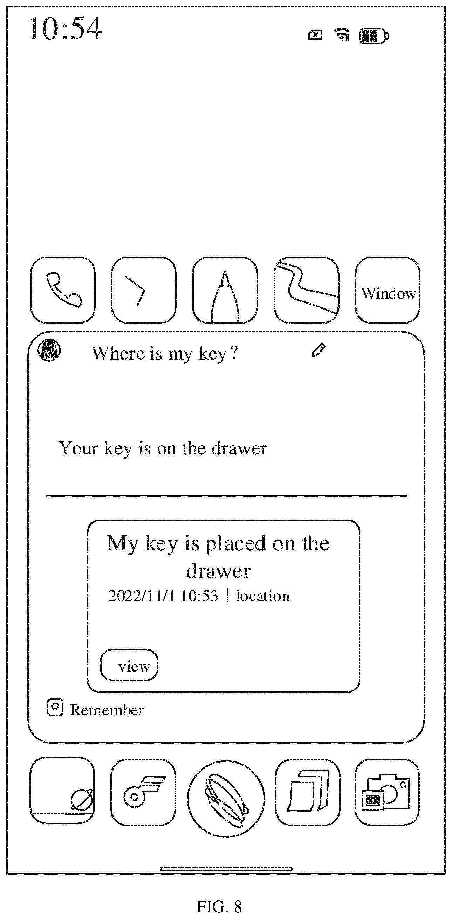

In the embodiment, the electronic device may also output the piece of original words information corresponding to the piece of target memorized information containing the piece of output answer information. As illustrated in FIG. 7 and FIG. 8, in FIG. 7, the piece of most recently created target memorized information "key, on the drawer" is selected, and the answer information "on the drawer" contained therein is displayed. Based on FIG. 7, FIG. 8 may further display the original words information "My key is placed on the drawer" corresponding to the piece of target memorized information "key, on the drawer" contaning the answer information "on the drawer".

In some implementations, when the categories of the multiple pieces of target memorized information are the second preset category, the selecting one piece of target memorized information from the multiple pieces of target memorized information and outputting the selected one piece of target memorized information may include: when the categories of the multiple pieces of target memorized information are the second preset category, selecting, from the multiple pieces of target memorized information, one piece of target memorized information added with a target mark, and outputting the selected one piece of target memorized information.

As an implementation, for multiple pieces of memorized information stored in the electronic device, the user may determine therefrom a piece of memorized information that is relatively important and add a target mark thereto, so that when the user subsequently searches for the memorized information, this piece of memorized information added with the target mark may be outputted preferentially. In the embodiment, when the categories of the multiple pieces of target memorized information are the second preset category, it may detect whether there is a piece of target memorized information added with a target mark in the multiple pieces of target memorized information. If a piece of target memorized information added with the target mark is detected, the piece of target memorized information added with the target mark may be output.

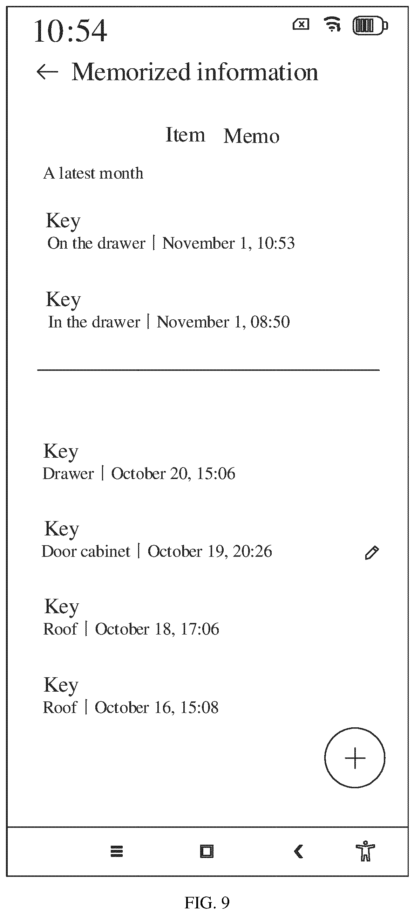

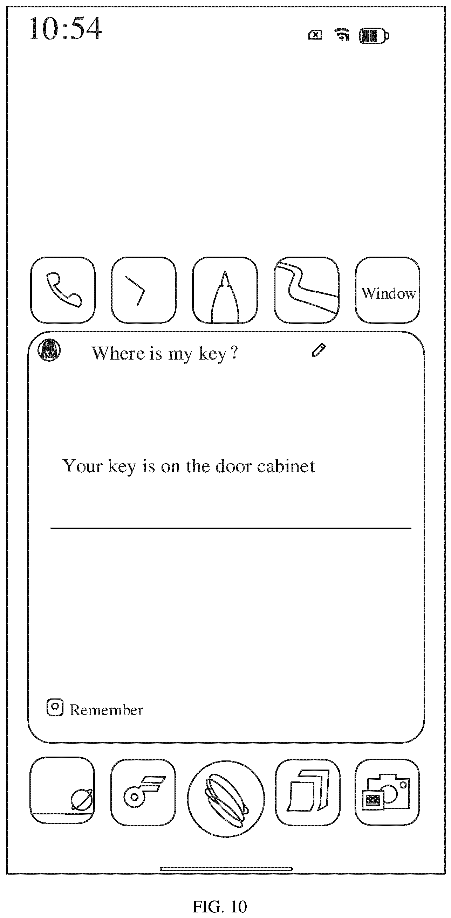

Referring to FIG. 9 and FIG. 10, FIG. 9 schematically illustrates a sixth interface of the electronic device as provided in the embodiments of the present disclosure, and FIG. 10 schematically illustrates a seventh interface of the electronic device as provided in the embodiments of the present disclosure. As illustrated in FIG. 9, in the memorized information display interface, the user has created multiple pieces of different memorized information for the storage location of the key at different times, and added a target mark (a pen shown in the figure) to a piece of memorized information created at 13:06 on October 20 which indicates that the key is placed on a door cabinet. As illustrated in FIG. 10, the information query operation is used to query the location of the key. A query statement "Where is my key?" may be entered. Multiple pieces of target memorized information are obtained through query, such as those illustrated in FIG. 9. Then, one piece of target memorized information "key, on the door cabinet" added with a target mark may be selected, and the answer information "on the door cabinet" contained therein is displayed, as illustrated in FIG. 10.

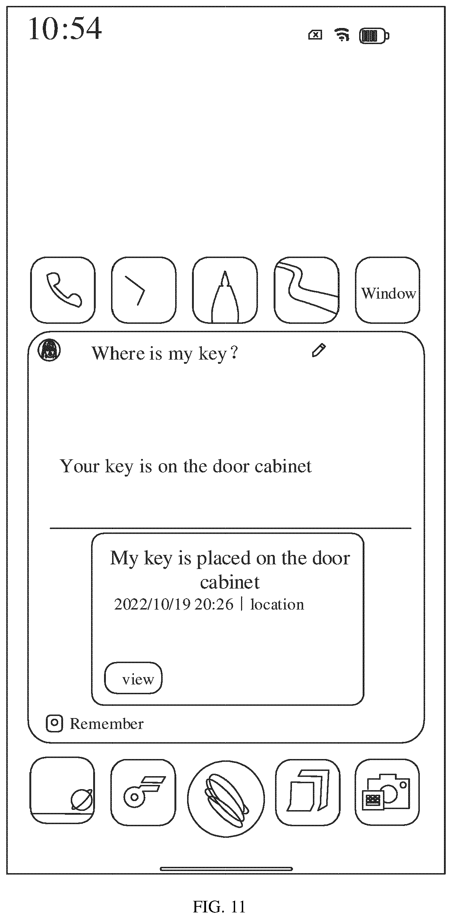

In the embodiment, the electronic device may also output the piece of original words information corresponding to the piece of target memorized information containing the piece of output answer information. As illustrated in FIG. 10 and FIG. 11, in FIG. 10, a piece of target memorized information "key, on the door cabinet" added with a target mark is selected, and the answer information "on the door cabinet" contained therein is displayed. On the basis of FIG. 10, in FIG. 11, the piece of original words information "My key is placed on the door cabinet" corresponding to the piece of target memorized information "key, on the door cabinet" where the piece of answer information "on the door cabinet" is located may also be displayed.

In the interaction method provided by the embodiment of the present disclosure, in response to receiving an information query operation, multiple pieces of target memorized information for the information query operation are obtained from multiple pieces of stored memorized information, and the categories of the multiple pieces of target memorized information are obtained. When the categories of the multiple pieces of target memorized information are the first preset category, the multiple pieces of answer information contained in all the multiple pieces of target memorized information are output. When the categories of the multiple pieces of target memorized information are the second preset category, one piece of target memorized information is selected from the multiple pieces of target memorized information, and the selected one piece of target memorized information is output. Compared with the interaction method illustrated in FIG. 1, in the embodiment, all the multiple pieces of target memorized information may be selected for output, or one of the multiple pieces of target memorized information may be selected and output, which can meet the user's demands for obtaining accurate memorized information and improve the user experience.

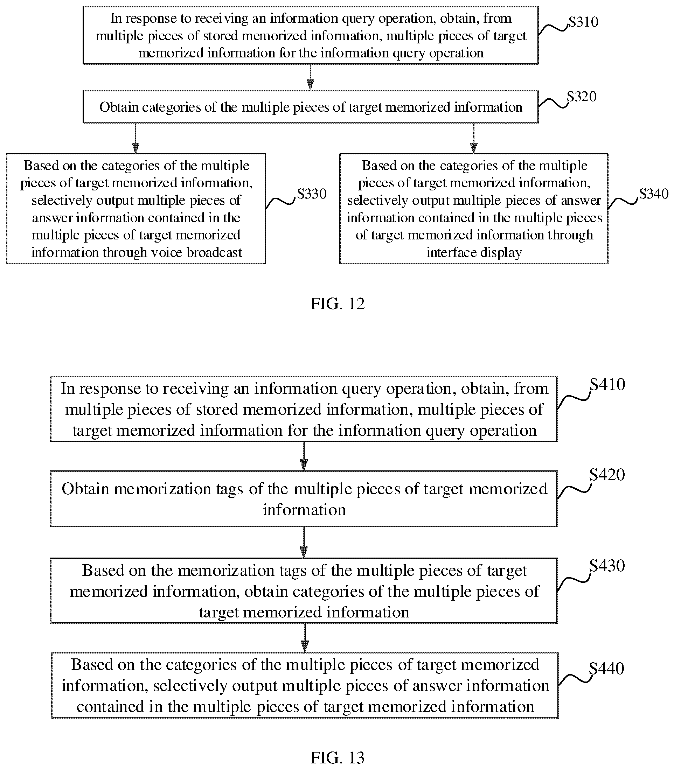

As illustrated in FIG. 12, a schematic flow chart of an interaction method provided in an embodiment of the present disclosure is shown. The process illustrated in FIG. 12 is described in detail below. The interaction method may specifically include operations S310-S340 as follows.

At S310, in response to receiving an information query operation, multiple pieces of target memorized information for the information query operation are obtained from multiple pieces of stored memorized information.

At S320, categories of the multiple pieces of target memorized information are obtained.

For the detailed description of operations S310 and S320, reference may be made to operations S110 and S120, which will not be repeated here.

At S330, based on the categories of the multiple pieces of target memorized information, multiple pieces of answer information contained in the multiple pieces of target memorized information are selectively output through voice broadcast.

In some implementations, the electronic device may selectively output the multiple pieces of answer information contained in the multiple pieces of target memorized information by means of a voice user interface (VUI). In the embodiment, after the categories of the multiple pieces of target memorized information are obtained, the multiple pieces of answer information contained in the multiple pieces of target memorized information may be selectively output through voice broadcast based on the categories of the multiple pieces of target memorized information. For example, the multiple pieces of target memorized information may be announced once through voice broadcast, or the multiple pieces of target memorized information may be announced multiple times through voice broadcast.

At S340, based on the categories of the multiple pieces of target memorized information, multiple pieces of answer information contained in the multiple pieces of target memorized information are selectively output through interface display.

In some implementations, the electronic device may selectively output the multiple pieces of answer information contained in the multiple pieces of target memorized information via a graphical user interface (GUI). In the embodiment, after the categories of the multiple pieces of target memorized information are obtained, the multiple pieces of answer information contained in the multiple pieces of target memorized information may be selectively output through interface display based on the categories of the multiple pieces of target memorized information. For example, the multiple pieces of target memorized information may be displayed once through the interface display, or the multiple pieces of target memorized information may be displayed multiple times through the interface display.

In the interaction method provided by the embodiment of the present disclosure, in response to receiving an information query operation, multiple pieces of target memorized information for the information query operation are obtained from multiple pieces of stored memorized information, and the categories of the multiple pieces of target memorized information are obtained. Based on the categories of the multiple pieces of target memorized information, the multiple pieces of answer information contained in the multiple pieces of target memorized information are selectively output through voice broadcast and/or interface display. Compared with the interaction method illustrated in FIG. 1, in the embodiment, the target memorized information may be also output through voice broadcast and/or interface display, which can clearly display the query result(s) and improve the user experience.

As illustrated in FIG. 13, a schematic flow chart of an interaction method provided in an embodiment of the present disclosure is shown. The process illustrated in FIG. 13 is described in detail below. The interaction method may specifically include operations S410-S440 as follows.

At S410, in response to receiving an information query operation, multiple pieces of target memorized information for the information query operation are obtained from multiple pieces of stored memorized information.

For the detailed description of operation S410, reference may be made to operation S110, which will not be repeated here.

At S420, memorization tags of the multiple pieces of target memorized information are obtained.

In some implementations, when storing a piece of memorized information, the electronic device may parse the piece of memorized information to obtain a parsing result, and add, based on the parsing result of the piece of memorized information, a memorization tag to represent a category of the piece of memorized information. Therefore, when storing a piece of memorized information, the electronic device may store the piece of memorized information and the memorization tag of the piece of memorized information in an associated manner. The memorization tag may include a date tag, a location tag, a person tag, a hobby tag, a health tag, a number tag, etc., which is not limited here. Based on this, in the embodiment, after the multiple pieces of target memorized information are obtained, the memorization tags of the multiple pieces of target memorized information may be obtained based on the multiple pieces of memorized information and the memorization tags of the multiple pieces of memorized information which are stored in an associated manner.

As an implementation, when storing a piece of memorized information, the electronic device may perform natural language processing on the piece of memorized information to obtain structured information of the piece of memorized information, and add, based on the structured information of the piece of memorized information, a memorization tag to represent the category of the piece of memorized information. The structured information of the piece of memorized information may include an entity, an entity attribute and an entity attribute value. The entity attribute of the piece of memorized information may be obtained, and based on the entity attribute of the piece of memorized information, a memorization tag used to represent the category of the piece of memorized information may be added. For example, assuming that the piece of memorized information is "My idol is Liu XX", it may be determined that the entity attribute of the piece of memorized information is "idol", and then a person tag may be added as the memorization tag for the category of the piece of memorized information.

At S430, based on the memorization tags of the multiple pieces of target memorized information, the categories of the multiple pieces of target memorized information are obtained.

In some implementations, the electronic device may be pre-set with and store multiple memorization tags, multiple categories, and correspondences between the multiple memorization tags and the multiple categories. The correspondences between the multiple memorization tags and the multiple categories may include that: one memorization tag corresponds to one category, multiple memorization tags correspond to one category, etc., which is not limited here. In the embodiment, after the memorization tags of the multiple pieces of memorized information are obtained, the categories corresponding to the tags of the multiple pieces of target memorized information may be obtained based on the correspondences between multiple memorization tags and multiple categories, as the categories of the multiple pieces of target memorized information.

At S440, based on the categories of the multiple pieces of target memorized information, multiple pieces of answer information contained in the multiple pieces of target memorized information are selectively output.

For the detailed description of operation S440, reference may be made to operation S130, which will not be repeated here.

In the interaction method provided by the embodiment of the present disclosure, in response to receiving an information query operation, multiple pieces of target memorized information for the information query operation are obtained from multiple pieces of stored memorized information, and memorization tags of the multiple pieces of target memorized information are obtained. Categories of the multiple pieces of target memorized information are obtained based on the memorization tags of the multiple pieces of target memorized information, and multiple pieces of answer information contained in the multiple pieces of target memorized information are selectively output based on the categories of the target memorized information. Compared with the interaction method illustrated in FIG. 1, in the embodiment, the category of the memorized information may be determined according to the memorization tag of the memorized information, which can improve the accuracy and efficiency of the determined category of the memorized information.

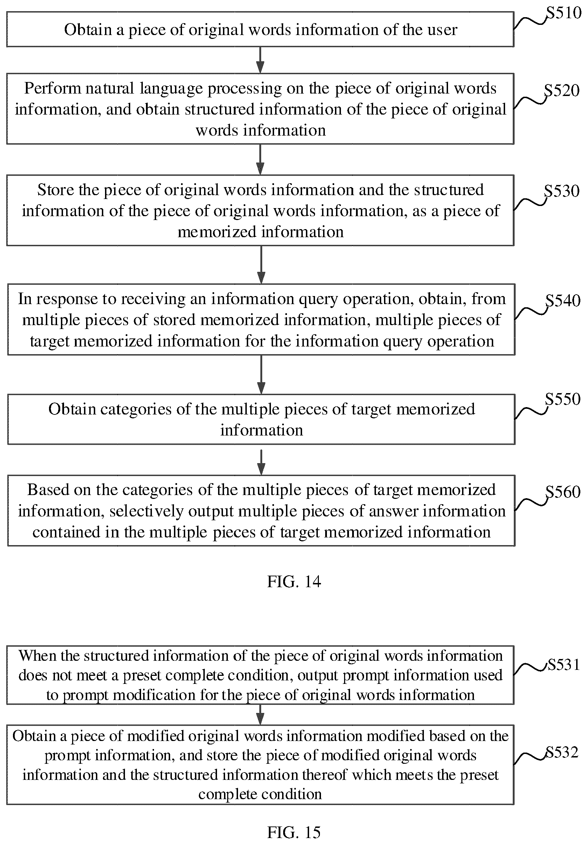

As illustrated in FIG. 14, a schematic flow chart of an interaction method provided in an embodiment of the present disclosure is shown. The process illustrated in FIG. 14 is described in detail below. The interaction method may specifically include operations S510-S560 as follows.

At S510, a piece of original words information of the user is obtained.

In the embodiment, the original words information of the user may be obtained.

In some implementations, it may be detected whether a memorized information creation operation is received. If it is detected that a memorized information creation operation is received, a piece of original words information of the user may be obtained after the memorized information creation operation is received.

In some implementations, the electronic device may determine that the memorized information creation operation is received when detecting a second target touch operation. For example, the electronic device may determine that the memorized information creation operation is received, when a second target touch operation performed on a target physical key is detected, or when a second target touch operation performed on a target virtual key is detected. The second target touch operation may include a click operation, a press operation, a slide operation, etc., which is not limited here. As an implementation, the electronic device may display a second target control used to trigger storage of memorized information. In this case, a touch operation performed on the second target control may be detected. When a second target touch operation performed on the second target control is detected, it may be determined that the memorized information creation operation is received.

In some implementations, the electronic device may determine that the memorized information creation operation is received when detecting second target voice information. For example, when receiving voice information including a second target keyword, the electronic device may determine that the memorized information creation operation is received. For example, the second target keyword may include: "Remember it", "Help to remember it", "Record it", "Save it", "Store it", etc., which is not limited here. Therefore, in the embodiment, when voice information input by the user is received, keyword extraction may be performed on the voice information to obtain keywords contained in the voice information, and the keywords contained in the voice information may be compared with the second target keyword to determine whether the keywords contained in the voice information include the second target keyword. If the keywords contained in the voice information include the second target keyword, it may be determined that the memorized information creation operation is received. If the keywords contained in the voice information do not include the second target keyword, it may be determined that the memorized information creation operation is not received.

In some implementations, the piece of original words information input by the user in text may be obtained, or the piece of original words information input by the user in voice may be obtained, which is not limited here. As an implementation, if the piece of original words information is input in text, the input text(s) may be determined as the piece of original words information. As another implementation, if the piece of original words information is input in voice, the input voice may be converted into text(s), and the text(s) obtained after the conversion is determined as the piece of original words information, where the input speech may be converted into text(s) by automatic speech recognition (ASR) technology.

At S520, natural language processing is performed on the piece of original words information, and structured information of the piece of original words information is obtained.

In the embodiment, after the piece of original words information is obtained, natural language processing may be performed on the piece of original words information to obtain structured information of the piece of original words information. As an implementation, after the piece of original words information is obtained, the piece of original words information may be split into a triple, a key-value pair, etc. for parse, and the structured information of the piece of original words information is thereby obtained.

In some implementations, the above structured information may be in the form of a triple or a key-value pair. Of course, the specific form of the structured information may not be limited. By extracting the structured information from the piece of original words information for storage, in subsequently query for memorized information, the answer content can be accurately found based on the stored structured information.

In a possible implementation, when the structured information is in the form of a triple, the structured information may include an entity, an entity attribute, and an entity attribute value. The entity may represent a subject, the entity attribute may represent a relationship between the entity and the entity attribute value, and the entity attribute value is a specific value of the entity attribute. It is understandable that the above obtaining of the structured information may be regarded as relational triple extraction (RTE), that is, two entities and a relation therebetween may be extracted from the original information at the same time. The triple may be expressed as (Subject, Relation, Object) or (Subject, Prodicate, Object), where Subject and Object are two entities which may also be called head entity and tail entity respectively, Relation and Prodicate represent a relationship classification. The head entity is the entity mentioned above, the tail entity is the entity attribute value mentioned above, and the relationship classification is the entity attribute mentioned above. For example, for a piece of original words information "I parked the car downstairs", the extracted entity is "car", the entity attribute is "location", and the entity attribute value is "downstairs". For another example, for a piece of original information "Dad likes to eat fish", the extracted entity is "Dad", the entity attribute is "favorite food", and the entity attribute value is "fish".

In a possible implementation, when the structured information is in the form of a key-value pair, the structured information may include an entity attribute and an entity attribute value. For example, for a piece of original information of "can't drink alcohol", the extracted entity attribute is "things that can't be done", and the entity attribute value is "drink alcohol".

At S530, the piece of original words information and the structured information of the piece of original words information are stored, and a piece of memorized information is thereby obtained.

In the embodiment, after the structured information of the piece of original words information is obtained, the piece of original words information and the structured information of the piece of original words information may be stored to obtain a piece of memorized information. For example, after the entity, entity attribute and entity attribute value of the piece of original words information are obtained, the piece of original words information and the entity, entity attribute and entity attribute value of the piece of original words information may be stored to obtain a piece of memorized information.

In some implementations, after a piece of original words information is obtained, it may be determined whether the multiple pieces of memorized information stored in the electronic device include a piece of memorized information of the same type as the piece of original words information. As an implementation, after a piece of original words information is obtained, the type of the piece of original words information and the types of the multiple pieces of stored memorized information may be obtained, and the type of the piece of original words information may be compared with the types of the multiple pieces of stored memorized information to determine whether there is a piece of memorized information in the multiple pieces of stored memorized information whose type is the same as the type of the piece of original words information. If it is determined that there is a piece of memorized information in the multiple stored memorized information which has the same type as the piece of original words information, the piece of original words information and this piece of memorized information of the same type may be stored in an associated manner. If it is determined that the multiple pieces of stored memorized information does not include a piece of memorized information of the same type as the piece of original words information, the piece of original words information and the multiple pieces of stored memorized information may be stored separately.

In some implementations, the structured information of the piece of original words information may include an entity attribute of the piece of original words information. The storing, when there is a piece of memorized information in the multiple pieces of stored memorized information which has the same type as the piece of original words information, the piece of original words information and this piece of memorized information of the same type in an associated manner may include: when there is a piece of memorized information in the multiple pieces of stored memorized information whose entity attribute is the same as the entity attribute of the piece of original words information, storing the piece of original words information and the piece of memorized information of the same type in an associated manner.

As an implementation, after the piece of original words information is obtained, natural speech processing may be performed on the piece of original words information to obtain the entity attribute of the piece of original words information, and it may be determined whether there is a piece of memorized information in the multiple pieces of memorized information stored in the electronic device whose entity attribute is the same as the entity attribute of the piece of original words information. As a way, after the entity attribute of the piece of original words information is obtained, the entity attribute of each of the multiple pieces of stored memorized information may be obtained, and the entity attribute of the piece of original words information may be compared with the entity attributes of the multiple pieces of stored memorized information to determine whether the multiple piece of stored memorized information include a piece of memorized information with the same entity attribute as the piece of original words information. If it is determined that there is a piece of memorized information in the multiple pieces of stored memorized information whose entity attribute is the same as the entity attribute of the piece of original words information, it may be determined that the piece of original words information and this piece of memorized information with the same entity attribute are of a same type, and the piece of original words information and this piece of memorized information with the same entity attribute may be stored in an associated manner. If it is determined that the multiple pieces of stored memorized information do not include a piece of memorized information with the same entity attribute as the piece of original words information, the piece of original words information and the multiple pieces of stored memorized information may be stored separately.

In some implementations, the structured information of the piece of original words information may include an entity and an entity attribute of the piece of original words information. The storing, when there is a piece of memorized information in the multiple pieces of stored memorized information which has the same type as the piece of original words information, the piece of original words information and the piece of memorized information of the same type in an associated manner may include: when there is a piece of memorized information in the multiple pieces of stored memorized information which has the same entity and entity attribute as the piece of original words information, storing the piece of original words information and the piece of memorized information of the same type in an associated manner.

As an implementation, after a piece of original words information is obtained, natural speech processing may be performed on the piece of original words information to obtain the entity and entity attribute of the piece of original words information, and it may be determined whether there is a piece of memorized information in the multiple pieces of memorized information stored in the electronic device whose entity and entity attribute are the same as the entity and entity attribute of the piece of original words information. As a way, after the entity and entity attribute of the piece of original words information are obtained, the entity and entity attribute of each of the multiple pieces of stored memorized information may be obtained, and the entity and entity attribute of the piece of original words information may be compared with the entities and entity attributes of the multiple pieces of stored memorized information to determine whether there is a piece of memorized information in the multiple pieces of stored memorized information whose entity and entity attribute are the same as the entity and entity attribute of the piece of original words information. If it is determined that there is a piece of memorized information in the multiple pieces of stored memorized information whose entity and entity attribute are the same as the entity and entity attribute of the piece of original words information, the piece of original words information and this piece of memorized information with the same entity and entity attribute may be stored in an associated manner. If it is determined that the multiple pieces of stored memorized information does not include a piece of memorized information with the same entity and entity attribute as the piece of original words information, the piece of original words information and the multiple pieces of stored memorized information may be stored separately.

In some implementations, the structured information of the piece of original words information may include an entity attribute and an entity attribute value. The storing, when there is a piece of memorized information in the multiple pieces of stored memorized information which has the same entity attribute as the piece of original words information, the piece of original words information and the piece of memorized information of the same type in an associated manner may include: when there is a piece of memorized information in the multiple pieces of stored memorized information whose entity attribute is the same as the entity attribute of the piece of original words information, storing the entity attribute value of the piece of original words information and the entity attribute value of this piece of memorized information of the same type in an associated manner.

As an implementation, when it is determined that there is a piece of memorized information in the multiple pieces of stored memorized information whose entity attribute is the same as the entity attribute of the piece of original words information, the entity attribute value of the piece of original words information and the entity attribute value of this piece of memorized information with the same entity attribute as the piece of original words information may be merged and stored.

Based on this, in the embodiment of the present disclosure, by merging and storing the entity attribute value of the piece of original words information and the entity attribute value of this piece of memorized information with the same entity attribute as the piece of original words information, in one aspect, the storage amount of the memorized information can be reduced and a part of storage space of the electronic device can be released. In another aspect, when the user queries the memorized information, the merged entity attribute values can be quickly output as the answer information, thereby improving the access efficiency of the query information.

As illustrated in FIG. 15, a schematic flow chart of operation S520 of the interaction method shown in FIG. 14 of the present disclosure is shown. The process illustrated in FIG. 15 is described in detail below. The method may specifically include operations S531-S532 as follows.

At S531, when the structured information of the piece of original words information does not meet a preset complete condition, prompt information is output, where the prompt information is used to prompt modification for the piece of original words information.

In some implementations, the electronic device may be pre-set with and store a preset complete condition, and the preset complete condition may be used as a determination basis for original words information. Therefore, in the embodiment, when the structured information of the piece of original words information is obtained, the structured information of the piece of original words information may be compared with the preset complete condition to determine whether the structured information of the piece of original words information meets the preset complete condition. As an implementation, the preset complete condition may include that the structured information includes at least the entity attribute and entity attribute value. That is, the structured information may include only the entity attribute and the entity attribute value, or it may contain the entity, the entity attribute, and the entity attribute value.

As an implementation, if it is determined that the structured information of the piece of original words information does not meet the preset complete condition, it may be considered that the piece of original words information input by the user does not meet a storage condition (that it, it cannot be stored), or it is difficult to be recognized subsequently even if it is stored. In this case, prompt information may be output to prompt modification for the piece of original words information.

In some implementations, the prompt information output may include: text prompt information, voice prompt information, vibration prompt information, light prompt information, etc., which is not limited here.

For example, it is assumed that a piece of information to be input is "cash gift to Chen Lin", it may be determined that the structured information of this piece of original words information includes an entity and an entity attribute, and it does not meet the preset complete condition. Thus, the prompt information may be output, where the prompt information may be used to prompt the user to add the entity attribute value (i.e., the value of the cash gift).

At S532, a piece of modified original words information that is modified based on the prompt information is obtained, and the piece of modified original words information and the structured information of the piece of modified original words information are stored, where the structured information of the piece of modified original words information meets the preset complete condition.

In some implementations, after the prompt information is output, it may be detected whether the user modifies the piece of original words information based on the prompt information. If it is detected that the user modifies the piece of original words information based on the prompt information, the piece of modified original words information that is modified based on the prompt information may be obtained.

As an implementation, the piece of modified original words information that is modified based on the prompt information and input in text may be obtained, or the piece of modified original words information that is modified based on the prompt information and input through voice may be obtained.

In the embodiment, after the piece of modified original words information is obtained, natural language processing may be performed on the piece of modified original words information to obtain structured information of the piece of modified original words information. The structured information of the piece of modified original words information may be compared with the preset complete condition to determine whether the structured information of the piece of modified original words information meets the preset complete condition. If it is determined that the structured information of the piece of modified original words information meets the preset complete condition, it may be considered that the piece of modified original words information may be stored normally, and the piece of modified original words information and the structured information of the piece of modified original words information may be stored. If it is determined that the structured information of the piece of modified original words information does not meet the preset complete condition, it may be considered that the piece of modified original words information still cannot be stored normally, and the prompt information may be output again, or the creation of memorized information may be directly abandoned.

At S540, in response to receiving an information query operation, multiple pieces of target memorized information for the information query operation are obtained from multiple pieces of stored memorized information.

At S550, categories of the multiple pieces of target memorized information are obtained.

At S560, based on the categories of the multiple pieces of target memorized information, multiple pieces of answer information contained in the multiple pieces of target memorized information are selectively output.

For the detailed description of operations S540 to S560, reference may be made to operations S110 to S130, which will not be repeated here.

In the interaction method provided in the embodiment of the present disclosure, a piece of original words information of the user is obtained, and natural language processing is performed on the piece of original words information to obtain structured information of the piece of original words information. The piece of original words information and the structured information of the piece of original words information are stored as a piece of memorized information. In response to receiving an information query operation, multiple pieces of target memorized information for the information query operation are obtained from the multiple pieces of stored memorized information. The categories of the multiple pieces of target memorized information are obtained, and multiple pieces of answer information contained in the multiple pieces of target memorized information are selectively output based on the categories of the multiple pieces of target memorized information. Compared with the interaction method illustrated in FIG. 1, in the embodiment, the structured information of the original words information may be stored, to facilitate subsequent query of the memorized information, which can improve the accuracy of subsequent query of the memorized information.

Referring to FIG. 16, a module block diagram of an interaction apparatus provided in an embodiment of the present disclosure is shown. The block diagram illustrated in FIG. 16 is described in detail below. The interaction apparatus 200 includes a memorized information query module 210, a category obtaining module 220, and a memorized information output module 230.

The memorized information query module 210 is configured to, in response to receiving an information query operation, obtain multiple pieces of target memorized information for the information query operation from multiple pieces of stored memorized information.

The category obtaining module 220 is configured to obtain categories of the multiple pieces of target memorized information.

Furthermore, the category obtaining module 220 includes a memorization tag obtaining submodule and a category obtaining submodule.

The memorization tag obtaining submodule is configured to obtain memorization tags of the multiple pieces of target memorized information.

The category obtaining submodule is configured to obtain the categories of the multiple pieces of target memorized information based on the memorization tags of the multiple pieces of target memorized information.

The memorized information output module 230 is configured to selectively output multiple pieces of answer information contained in the multiple pieces of target memorized information, based on the categories of the multiple pieces of target memorized information.

Furthermore, the memorized information output module 230 includes a first memorized information output submodule and a second memorized information output submodule.

The first memorized information output submodule is configured to output the multiple pieces of answer information contained in all the multiple pieces of target memorized information, when the categories of the multiple pieces of target memorized information are a first preset category.

Furthermore, the first memorized information output submodule includes a first memorized information output unit.

The first memorized information output unit is configured to merge the multiple pieces of answer information contained in all the multiple pieces of target memorized information and output the merged answer information, when the categories of the multiple pieces of target memorized information are the first preset category.

Furthermore, the first memorized information output submodule includes a second memorized information output unit and a third memorized information output unit.

The second memorized information output unit is configured to output the multiple pieces of answer information contained in all the multiple pieces of target memorized information in order of creation times of all the multiple pieces of target memorized information from latest to earliest, when the categories of the multiple pieces of target memorized information are the first preset category.

The third memorized information output unit is configured to output the multiple pieces of answer information contained in all the multiple pieces of target memorized information in order of priorities of the multiple pieces of target memorized information from high to low, when the categories of the multiple pieces of target memorized information are the first preset category.

The second memorized information output submodule is configured to select one piece of target memorized information from the multiple pieces of target memorized information, and output the selected one piece of target memorized information, when the categories of the multiple pieces of target memorized information are a second preset category.

Furthermore, the second memorized information output submodule includes a first memorized information determination unit and a second memorized information determination unit.

The first memorized information determination unit is configured to select, from the multiple pieces of target memorized information, one piece of target memorized information that is most recently created.

The second memorized information determination unit is configured to select, from the multiple pieces of target memorized information, one piece of target memorized information added with a target mark.

Furthermore, the memorized information output module 230 includes a third memorized information output submodule.

The third memorized information output submodule is configured to output a piece of original words information corresponding to each piece of target memorized information containing a piece of answer information.

Furthermore, the memorized information output module 230 includes a fourth memorized information output submodule and a fifth memorized information output submodule.

The fourth memorized information output submodule is configured to selectively output the multiple pieces of answer information contained in the multiple pieces of target memorized information through voice broadcast, based on the categories of the multiple pieces of target memorized information.

The fifth memorized information output submodule is configured to selectively output the multiple pieces of answer information contained in the multiple pieces of target memorized information through interface display, based on the categories of the multiple pieces of target memorized information.

Furthermore, the interaction apparatus 200 further includes an original words information obtaining module, a structured information obtaining module and an original words information storage module.

The original words information obtaining module is configured to acquire a piece of original words information of the user.

The structured information obtaining module is configured to perform natural language processing on the piece of original words information to obtain structured information of the piece of original words information.

The original words information storage module is configured to store the piece of original words information and the structured information of the piece of original words information to obtain a piece of memorized information.

Furthermore, the original words information storage module includes a first original words information storage submodule.

The first original words information storage submodule is configured to, when there is a piece of memorized information in the multiple pieces of stored memorized information which has the same type as the piece of original words information, store the piece of original words information and this piece of memorized information of the same type in an associated manner.

Furthermore, the structured information of the piece of original words information includes an entity attribute of the piece of original words information, and the original words information storage module includes a second original words information storage module.

The second original words information storage module is configured to, when there is a piece of memorized information in the multiple pieces of stored memorized information which has the same entity attribute as the piece of original words information, store the piece of original words information and this piece of memorized information of the same type in an associated manner.

Furthermore, the structured information of the piece of original words information further includes an entity attribute value of the entity attribute, and the second original words information storage module includes an original words information storage unit.

The original words information storage unit is configured to, when there is a piece of memorized information in the multiple pieces of stored memorized information which has the same entity attribute as the piece of original words information, store the entity attribute value of the piece of original words information and the entity attribute value of this piece of memorized information of the same type in an associated manner.

Furthermore, the original words information storage module includes a prompt information output submodule and an original words information modification submodule.

The prompt information output submodule is configured to output prompt information when the structured information of the piece of original words information does not meet a preset complete condition, where the prompt information is used to prompt modification for the piece of original words information.

The original words information modification submodule is configured to obtain a piece of modified original words information that is modified based on the prompt information, and store the piece of modified original words information and structured information of the piece of modified original words information, where the structured information of the piece of modified original words information meets the preset complete condition.

Those skilled in the art can clearly understand that, for the convenience and brevity of description, the specific working processes of the above-described apparatus and modules may refer to the corresponding processes in the aforementioned method embodiments, which will not be repeated here.

In several embodiments provided in the present disclosure, the coupling between modules may be electrical, mechanical or in other forms.

In addition, the individual functional modules in each embodiment of the present disclosure may be integrated into one processing module, or each module may exist physically separately, or two or more modules may be integrated into one module. The integrated module may be implemented in hardware or software functional modules.

Referring to FIG. 17, a structural block diagram of an electronic device 100 provided in the embodiments of the present disclosure is shown. The electronic device 100 may be an electronic device capable of running application programs, such as a smart phone, a tablet computer, or an e-book. The electronic device 100 in the present disclosure may include one or more of a processor 110, a memory 120, and one or more application programs. The one or more application programs may be stored in the memory 120 and configured to be executed by one or more processors 110, and the one or more programs are configured to execute the methods as described in the aforementioned method embodiments.

The processor 110 may include one or more processing cores. The processor 110 uses various interfaces and lines to connect various parts within the entire electronic device 100, and performs various functions of the electronic device 100 and processes data by running or executing instructions, programs, code sets or instruction sets stored in the memory 120, and calling data stored in the memory 120. Optionally, the processor 110 may be implemented in at least one hardware of digital signal processing (DSP), field-programmable gate array (FPGA), and programmable logic array (PLA). The processor 110 may integrate one or a combination of a central processing unit (CPU), a graphics processing unit (GPU), a modem, and the like. The CPU mainly processes the operating system, user interface and applications. The GPU is responsible for rendering and drawing content to be displayed. The modem is used to handle wireless communications. It is understandable that the modem may not be integrated into the processor 110, but may be implemented separately through a communication chip.

The memory 120 may include a random access memory (RAM) or a read-only memory. The memory 120 may be used to store instructions, programs, codes, code sets, or instruction sets. The memory 120 may include a program storage area and a data storage area. The program storage area may store instructions for implementing an operating system, instructions for implementing functions (such as touch functions, sound playback functions, and image playback functions), instructions for implementing the following method embodiments, etc. The data storage area may also store data created by the electronic device 100 during use (such as a phone book, audio and video data, and chat record data).

Referring to FIG. 18, a structural block diagram of a computer-readable storage medium provided in an embodiment of the present disclosure is shown. The computer-readable storage medium 300 stores program codes which can be called by a processor to execute the methods described in the above method embodiments.

The computer-readable storage medium 300 may be an electronic memory such as a flash memory, an Electrically Erasable Programmable Read Only Memory (EEPROM), an EPROM, a hard disk, or a ROM. Optionally, the computer-readable storage medium 300 includes a non-transitory computer-readable storage medium. The computer-readable storage medium 300 has storage space for program codes 310 for executing any method operation in the above-described methods. The program codes may be read from or written into one or more computer program products. The program codes 310 may be compressed for example in a suitable form.

In summary, in the interaction method and apparatus, the electronic device, and the storage medium provided in the embodiments of the present disclosure, in response to receiving an information query operation, multiple pieces of target memorized information for the information query operation are obtained from multiple pieces of stored memorized information. Categories of the multiple pieces of target memorized information are obtained, and multiple pieces of answer information contained in the multiple pieces of target memorized information are selectively output based on the categories of the multiple pieces of target memorized information. Therefore, when the user queries memorized information, the queried memorized information is presented in different ways according to its corresponding category, which can meet the user's demands for obtaining accurate memorized information and improve the user experience.

Finally, it is notable that the above embodiments are only used to illustrate the technical solutions of the present disclosure, rather than limiting it. Although the present disclosure has been described in detail with reference to the aforementioned embodiments, those skilled in the art should understand that they can still modify the technical solutions described in the aforementioned embodiments, or make equivalent replacements for some of the technical features therein. However, these modifications or replacements do not cause the essence of the corresponding technical solutions to deviate from the spirit and scope of the technical solutions of the embodiments of the present disclosure.

## Claims

1. An interaction method, comprising:
in response to receiving an information query operation, obtaining, from a plurality of pieces of stored memorized information, a plurality of pieces of target memorized information for the information query operation;
obtaining categories of the plurality of pieces of target memorized information; and
selectively outputting, based on the categories of the plurality of pieces of target memorized information, a plurality of pieces of answer information contained in the plurality of pieces of target memorized information.

2. The method as claimed in claim 1, wherein the selectively outputting, based on the categories of the plurality of pieces of target memorized information, a plurality of pieces of answer information contained in the plurality of pieces of target memorized information, comprises:
in response to the categories of the plurality of pieces of target memorized information being a first preset category, outputting the plurality of pieces of answer information contained in all the plurality of pieces of target memorized information;
in response to the categories of the plurality of pieces of target memorized information being a second preset category, selecting one piece of target memorized information from the plurality of pieces of target memorized information, and outputting a piece of answer information contained in the selected one piece of target memorized information.

3. The method as claimed in claim 2, wherein the outputting the plurality of pieces of answer information contained in all the plurality of pieces of target memorized information in response to the categories of the plurality of pieces of target memorized information being a first preset category, comprises:
in response to the categories of the plurality of pieces of target memorized information being the first preset category, merging the plurality of pieces of answer information contained in all the plurality of pieces of target memorized information, and outputting the merged answer information.

4. The method as claimed in claim 3, wherein the merging the plurality of pieces of answer information contained in all the plurality of pieces of target memorized information and outputting the merged answer information, comprises:
obtaining spliced information by splicing the plurality of pieces of answer information contained in all the plurality of pieces of target memorized information, and outputting the spliced information; or
obtaining fused information by fusing the plurality of pieces of answer information contained in all the plurality of pieces of target memorized information, and outputting the fused information.

5. The method as claimed in claim 2, further comprising:
outputting a piece of original words information corresponding to each piece of target memorized information containing a piece of output answer information.

6. The method as claimed in claim 2, wherein the outputting the plurality of answer information contained in all the plurality of pieces of target memorized information in response to the categories of the plurality of pieces of target memorized information being a first preset category, comprises:
in response to the categories of the plurality of pieces of target memorized information being the first preset category, outputting the plurality of pieces of answer information contained in all the plurality of pieces of target memorized information in order of creation times of all the plurality of pieces of target memorized information from latest to earliest; or
in response to the categories of the plurality of pieces of target memorized information being the first preset category, outputting the plurality of pieces of answer information contained in all the plurality of pieces of target memorized information in order of priorities of all the plurality of pieces of target memorized information from high to low.

7. The method as claimed in claim 2, wherein the selecting one piece of target memorized information from the plurality of pieces of target memorized information comprises:
selecting, from the plurality of pieces of target memorized information, one piece of target memorized information that is most recently created; or
selecting, from the plurality of pieces of target memorized information, one piece of target memorized information added with a target mark.

8. The method as claimed in claim 1, wherein the selectively outputting, based on the categories of the plurality of pieces of target memorized information, a plurality of pieces of answer information contained in the plurality of pieces of target memorized information, comprises:
selectively outputting, based on the categories of the plurality of pieces of target memorized information, the plurality of answer information contained in the plurality of pieces of target memorized information through voice broadcast; and/or
selectively outputting, based on the categories of the plurality of pieces of target memorized information, the plurality of answer information contained in the plurality of pieces of target memorized information through interface display.

9. The method as claimed in claim 1, wherein the obtaining categories of the plurality of pieces of target memorized information comprises:
obtaining a memorization tag of each of the plurality of pieces of target memorized information; and
obtaining, based on the memorization tag of each of the plurality of pieces of target memorized information, the category of the each of the plurality of pieces of target memorized information.

10. The method as claimed in 9, wherein the obtaining, based on the memorization tag of each of the plurality of pieces of target memorized information, the category of the each of the plurality of pieces of target memorized information, comprises:
obtaining, based on correspondences between a plurality of memorization tags and a plurality of categories, a category corresponding to the memorization tag of each of the plurality of pieces of target memorized information, as the category of the piece of target memorized information.

11. The method as claimed in any one of claims 1 to 10, wherein before obtaining, in response to receiving the information query operation, the plurality of pieces of target memorized information for the information query operation from the plurality of pieces of stored memorized information, the method further comprises:
obtaining a piece of original words information of a user;
performing natural language processing on the piece of original words information, and obtaining structured information of the piece of original words information; and
storing the piece of original words information and the structured information of the piece of original words information, as a piece of memorized information.

12. The method as claimed in claim 11, further comprising:
in response to there being a piece of memorized information in the plurality of pieces of stored memorized information that has a same type as the piece of original words information, storing the piece of original words information and this piece of memorized information of the same type in an associated manner.

13. The method as claimed in claim 12, wherein the structured information of the piece of original words information comprises an entity attribute of the piece of original words information, and the storing, in response to there being a piece of memorized information in the plurality of pieces of stored memorized information that has a same type as the piece of original words information, the piece of original words information and this piece of memorized information of the same type in an associated manner, comprises:
in response to there being a piece of memorized information in the plurality of pieces of stored memorized information whose entity attribute is the same as the entity attribute of the piece of original words information, storing the piece of original words information and this piece of memorized information of the same type in the associated manner, wherein pieces of information having a same entity attribute represent that the pieces of information are of a same type.

14. The method as claimed in claim 13, wherein the structured information of the piece of original words information further comprises an entity attribute value, and the storing, in response to there being a piece of memorized information in the plurality of pieces of stored memorized information whose entity attribute is the same as the entity attribute of the piece of original words information, the piece of original words information and this piece of memorized information of the same type in the associated manner, comprises:
in response to there being a piece of memorized information in the plurality of pieces of stored memorized information whose entity attribute is the same as the entity attribute of the piece of original words information, storing the entity attribute value of the piece of original words information and an entity attribute value of this piece of memorized information of the same type in the associated manner.

15. The method as claimed in claim 11, wherein the storing the piece of original words information and the structured information of the piece of original words information comprises:
in response to the structured information of the piece of original words information not meeting a preset complete condition, outputting prompt information, wherein the prompt information is used to prompt modification for the piece of original words information; and
obtaining a piece of modified original words information that is modified based on the prompt information, and storing the piece of modified original words information and structured information of the piece of modified original words information, wherein the structured information of the piece of modified original words information meets the preset complete condition.

16. The method as claimed in any one of claims 1 to 10, wherein before obtaining, in response to receiving the information query operation, a plurality of pieces of target memorized information for the information query operation from the plurality of pieces of stored memorized information, the method further comprises:
in response to detecting a first target touch operation performed on a first target control, determining that the information query operation is received.

17. The method as claimed in any one of claims 1 to 10, wherein before obtaining, in response to receiving the information query operation, a plurality of pieces of target memorized information for the information query operation from the plurality of pieces of stored memorized information, the method further comprises:
in response to receiving voice information, obtaining keywords contained in the voice information by performing keyword extraction on the voice information; and
in response to the keywords comprising a first target keyword, determining that the information query operation is received.

18. An interaction apparatus, comprising:
a memorized information query module, configured to obtain, in response to receiving an information query operation, a plurality of pieces of target memorized information for the information query operation from a plurality of pieces of stored memorized information;
a category obtaining module, configured to obtain categories of the plurality of pieces of target memorized information; and
a memorized information output module, configured to selectively output, based on the categories of the plurality of pieces of target memorized information, a plurality of answer information contained in the plurality of pieces of target memorized information.

19. An electronic device, comprising a memory and a processor, wherein the memory is coupled to the processor, and the memory stores instructions which, when being executed by the processor, cause the processor to implement the method as claimed in any one of claims 1 to 17.

20. A computer-readable storage medium having program codes stored thereon, wherein the program codes are invokable by a processor to implement the method as claimed in any one of claims 1 to 17.
